# EUROPÄISCHE PATENTSCHRIFT

(11) **EP 2 775 151 B1**
(45) Veröffentlichungstag und Bekanntmachung des Hinweises auf die Patenterteilung: **02.08.2017**
(21) Anmeldenummer: 13158421.1
(22) Anmeldetag: 08.03.2013
(51) Int. Cl.: F15B 13/04, F15B 13/044, F16K 39/02, F16K 31/06, F16K 37/00

(54) **Wegesitzventil**
Directional seat valve
Distributeur à clapet

(43) Veröffentlichungstag der Anmeldung: 10.09.2014
(73) Patentinhaber: HAWE Hydraulik SE, 81673 München (DE)
(72) Erfinder: Heusser, Martin, 81245 München (DE)
(74) Vertreter: Grosse Schumacher Knauer von Hirschhausen

(56) Entgegenhaltungen:
- EP-A2- 1 477 344
- DE-A1- 19 744 317
- DE-A1-102005 008 763
- NL-C2- 1 014 326

## Beschreibung

Die Erfindung betrifft ein Wegesitzventil gemäß Oberbegriff des Patentanspruches 1.

Von der Anmelderin sind solche Wegesitzventile mit der Typenbezeichnung BVP seit Jahrzehnten bekannt (z.B. Zweiwege-Sitzventile). Der Kegel wird in der beispielsweise mit der Druckquelle verbindbaren Kammer mit seiner außenliegenden Dichtfläche durch die Feder gegen den Sitz gepresst, um die Sperrstellung einzunehmen. Um in die Durchgangsstellung zu schalten, wird der Magnet bestromt, so dass er den Kegel von dem Sitz axial abdrückt und die mit der Druckquelle verbundene Kammer mit einer mit dem Verbraucher verbundenen Kammer verbindet. Der Magnet ist ein bei Bestromung drückender Magnet. Ein Federwiderlager der Feder ist mit einem Stößel gekoppelt, der den beispielsweise am dem Magneten abgewandten Ende des Gehäuses montierten Schalter betätigt. Das vom Schalter abgegebene Signal bestätigt, dass der Magnet ordnungsgemäß durchgeschaltet hat, und zeigt an, falls der Kegel bei nicht mehr bestromtem Magneten von der Feder nicht ordnungsgemäß zurück in die Sperrstellung am Sitz gebracht worden ist. Der Magnet betätigt den Kegel direkt, d.h. ohne Druckvorsteuerung. Das Wegesitzventil ist kostengünstig und funktionssicher. Jedoch ist konstruktionsbedingt in der Sperrstellung das Wegesitzventil in beiden Strömungsrichtungen leckagefrei dicht.

Es gibt in der Praxis Anwendungsfälle, in denen ein solches Wegesitzventil in der Sperrstellung in nur einer Strömungsrichtung leckagefrei dicht sein muss, hingegen in der anderen Strömungsrichtung eine Durchströmung möglich sein soll, wenn der Magnet nicht bestromt ist. Um mit dem Wegesitzventil auch diese Anforderung erfüllen zu können, wird üblicherweise z.B. in einem Block ein Bypasskanal mit einem Rückschlagventil vorgesehen, was zusätzlichen baulichen Aufwand erfordert. Falls dieses Rückschlagventil auch in einen Sicherheitskreis eingegliedert sein muss, um die Rückschlagsperrstellung oder die Offenstellung des Rückschlagventils durch ein Signal zu bestätigen, muss dem Rückschlagventil ein separater Schalter zugeordnet werden, was zusätzlichen Aufwand und ein zusätzliches Kabel erfordert.

In der Praxis sind bereits Wegesitzventile bekannt, die in der Sperrstellung in nur einer Strömungsrichtung leckagefrei dicht sind, d.h. in der entgegengesetzten Strömungsrichtung eine Durchströmung zulassen, wenn der Magnet nicht bestromt ist. Hierbei sind jedoch ein bei Bestromung ziehender Magnet und für den Kegel eine Druckvorsteuerung mit einem Pilotventil im Kegel vorgesehen, das vom Magneten betätigt wird, um aus der Sperrstellung in die Durchgangsstellung zu schalten. Ein ziehender Magnet ist teuer und erfordert zusätzlichen baulichen Aufwand im Wegesitzventil. Wird, wie in vielen Anwendungsfällen erforderlich, eine Handnotbetätigung des Wegesitzventils konstruktiv eingegliedert, dann ist dies bei einem ziehenden Magneten aufwändig, d.h., weitaus aufwändiger als bei einem drückenden Magneten.

Aus DE 197 44 317 A1 ist eine Ventilanordnung bekannt, in einem glockenförmigen Sitzventilkörper zusätzlich ein federbelastetes Rückschlagventil untergebracht ist.

Bei einem aus NL 1014326 A bekannten Magnetventil mit Pilotvorsteuerung ist in einem Schließkolben eines Sitzventils zusätzlich ein federbelastetes Rückschlagventil untergebracht.

Der Erfindung liegt die Aufgabe zugrunde, ein Wegesitzventil der eingangs genannten Art zu schaffen, das trotz eines den Kegel direkt und drückend betätigenden Magneten in der Sperrstellung in nur einer Strömungsrichtung leckagefrei dicht ist.

Die gestellte Aufgabe wird mit den Merkmalen des Patentanspruches 1 gelöst.

Obwohl der Kegel in der Sperrstellung an sich in beiden Strömungsrichtungen am Sitz leckagefreie Dichtheit herstellt, wenn der Magnet nicht bestromt ist, umgeht das zusätzlich direkt in das Wegesitzventil eingegliederte Rückschlagventil den Sitz, um in der gewünschten Strömungsrichtung druckabhängig eine Durchströmung zuzulassen, wenn das Wegesitzventil in seiner Sperrstellung ist und der Magnet nicht bestromt wird. Da das Rückschlagventil zwischen dem Kegel und dem Schalter funktionell integriert ist, betätigt es in der Sperrstellung den Schalter sozusagen anstelle des Kegels, so dass ein Signal bereitstellbar ist, das beispielsweise die Offenstellung des Rückschlagventils bestätigt. Hierbei ist es von Vorteil, dass dieses zusätzliche, der Betriebssicherheit dienende Signal von demselben Schalter generierbar ist, der auch den Kegel selbst überwacht, so dass das Wegesitzventil mit einem einzigen Schalter auskommt und eine übergeordnete Steuerung auch nur mit einem einzigen Kabel an den Schalter anschließbar ist. Auf diese Weise wird das Wegesitzventil für Einsatzfälle nutzbar, in denen in einer Strömungsrichtung eine Durchströmung in der Sperrstellung möglich sein soll. Das Wegesitzventil ist kostengünstig, da das Rückschlagventil zwischen ohnedies vorgesehenen Komponenten, d.h. dem Kegel und dem Federwiderlager unterbringbar ist, und dieselbe Feder nutzen kann, wie der Kegel.

Zweckmäßig ist das Rückschlagventil zwischen dem Kegel und einem vom Kegel separierten Federwiderlager der Feder vorgesehen. Die bauliche Trennung des Federwiderlagers vom Kegel bietet u.a. den Vorteil, dass das Rückschlagventil das Federwiderlager dazu nutzt, den Schalter anstelle des sich dann nicht bewegenden Kegels zu betätigen. Das Federwiderlager ist mit einer Schalterbetätigung versehen oder bewegungsübertragend verbunden. Dies ist beispielsweise ein Stößel, der einen Mikroschalter mechanisch betätigt, oder einen berührungslosen Schalter. An dem Schaltpunkt des Schalters wird dieser entweder geschlossen oder geöffnet, je nachdem, in welcher Weise das Signal weiter verarbeitet wird.

Das Federwiderlager kann, dem Kegel zugewandt, eine konische oder kugelige Dichtfläche aufweisen, zweckmäßig an einem am Federwiderlager angeordneten oder von diesem getragenen Schließkörper des Rückschlagventils. Im Kegel selbst ist am dem Sitz in Richtung zur

Feder abgewandten Ende ein Rückschlagventilsitz geformt, mit dem diese Dichtfläche zusammenwirkt. Ferner ist im Kegel zumindest ein eine äußere Dichtfläche des Kegels umgehender, innerer Kanal vorgesehen, der zu dem Rückschlagventilsitz führt, so dass das Rückschlagventil in der Offenstellung den in der Sperrstellung des Kegels an sich leckagefrei dicht verschlossenen Sitz umgeht.

Zweckmäßig sind der Dichtdurchmesser des Kegels am Sitz und der Dichtdurchmesser im Rückschlagventil zumindest im Wesentlichen gleich groß. Damit wird erreicht, dass zum Umstellen des Rückschlagventils in die Offenstellung eine relativ große Beaufschlagungsfläche vorliegt, auf der der Druck angreift.

Ferner ist zweckmäßig am Magneten eine Handnotbetätigung zum Abdrücken des Kegels vom Sitz vorgesehen, Die Handnotbetätigung ermöglicht es, beispielsweise bei einem Stromausfall, den Kegel z.B. über den Anker des Magneten gegen die Kraft der Feder vom Sitz abzudrücken.

Im Hinblick auf erhöhte Sicherheit ist es zweckmäßig, wenn die Handnotbetätigung, vorzugsweise in der Durchgangsstellung des Wegesitzventils und auch bei gegebenenfalls betätigtem Schalter, durch eine Rastvorrichtung mechanisch verrastbar ist. Wenn beispielsweise der Kegel mittels der Handnotbetätigung vom Sitz abgehoben wird, wobei das Rückschlagventil sperrt, wird über die Verrastung die Durchgangsstellung so lange selbsttätig gehalten, bis an der Handnotbetätigung die Rastwirkung wieder überwunden wird. Ist wieder Strom verfügbar, dann zeigt das Signal des Schalters z.B. an, dass die Handnotbetätigung noch nicht ordnungsgemäß zurückgestellt wurde. Auf diese Weise überwacht der einzige Schalter sämtliche Funktionen des Wegesitzventils, d.h. die Betätigung durch den Magneten, durch die Handnotbetätigung, und sogar das Ansprechen des Rückschlagventils.

Um mit einer relativ schwachen Feder auszukommen, und auch die Betätigungskräfte bei der Handnotbetätigung moderat zu halten, ist zweckmäßig der Kegel druckausgeglichen. Dies wird, da das Rückschlagventil zwischen dem Kegel und dem Federwiderlager einem Innenkanal im Wege ist, zweckmäßig über einen Gehäusekanal bewerkstelligt, der die beiden Wege bzw. beiden Kammern beiderseits des Sitzes miteinander verbindet.

Zweckmäßig ist der Schalter mit einer übergeordneten Steuerung verbunden und liefert er beispielsweise im betätigten Zustand ein Signal, welches eine Magnetbetätigung, eine Handnotbetätigung und auch eine Druckaufsteuerung des Rückschlagventils repräsentiert.

Zweckmäßig ist das Wegesitzventil in eine hydraulische Steuervorrichtung eines Hydroverbrauchers eingeordnet, und zwar zwischen einer Druckquelle und einer Beaufschlagungskammer des Hydroverbrauchers, wobei die Beaufschlagungskammer bei nicht benutzter Handnotbetätigung und/oder nicht bestromtem Magneten in der Sperrstellung des Kegels aus der Druckquelle über das in die Offenstellung gehende Rückschlagventil druckbeaufschlagbar ist, wobei das Rückschlagventil dann gegebenenfalls auch den Schalter betätigt, so dass ein Signal anliegt, das die Offenstellung des Rückschlagventils repräsentiert. Eine solche Hydrauliksteuervorrichtung ist beispielsweise in einem Einsatzfall zweckmäßig, bei welchem ein Umlenkradschlitten eines Trag- und/oder Zugseils eines Skiliftes durch wenigstens einen Hydroverbraucher hydraulisch in eine Spannstellung gebracht und in dieser gehalten wird. Der Hydroverbraucher ist in diesem Fall ein einseitig beaufschlagbarer Hydraulikzylinder, auf dessen Kolbenstange permanent die ziehende Last des Umlenkschlittens einwirkt. Sicherheitshalber sind zwei Hydraulikzylinder parallel geschaltet, parallel angesteuert und jeweils über ein Wegesitzventil abgesichert. Die Beaufschlagungskammer des einen Hydraulikzylinders soll aus der Druckquelle auch druckbeaufschlagbar sein, z.B. nach Behebung eines Schlauchbruchs oder einer Reparatur am Hydraulikzylinder, ohne den Magneten des Wegesitzventils zu bestromen, was über das dann ansprechende Rückschlagventil möglich ist. Hingegen soll die Beaufschlagungskammer, falls unter Druck, leckagefrei dicht abgesperrt sein, solange der Magnet nicht bestromt wird.

Anhand der Zeichnungen werden Ausführungsformen des Erfindungsgegenstandes erläutert. Es zeigen:
- Fig. 1: eine Seitenansicht eines Wegesitzventils,
- Fig. 2: ein Blockschaltbild des Wegesitzventils in symbolischer Darstellung,
- Fig. 3: einen Teillängsschnitt des Wegesitzventils in einer Sperrstellung, und
- Fig. 4: eine Hydraulik-Steuervorrichtung, in der das Wegesitzventil enthalten ist, in drucklosem Zustand.

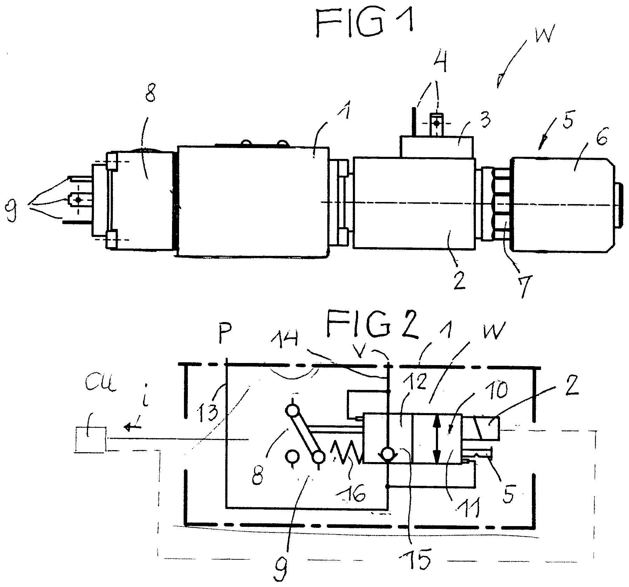

Ein in den Fig. 1 und 2 gezeigtes Wegesitzventil W (beispielsweise ein Zweiwege/Zweistellungs-Sitzventil) weist ein Gehäuse 1, z.B. aus Stahl in Blockform, auf, an welchem an einem Ende ein Magnet 2, beispielsweise ein Schwarz/Weiß-Magnet oder ein Proportional-Magnet, angeflanscht ist, der einen Anschluss 3 mit Steckzungen 4 trägt. Ferner ist dem Magneten 2 eine Handnotbetätigung 5 zugeordnet, beispielsweise in Form eines Drehknopfes 6, der, vorzugsweise, mit einer Rastvorrichtung 7 zusammenwirkt und in wenigstens einer Drehstellung verrastbar ist. Am dem Magneten 2 gegenüberliegenden Ende des Gehäuses 1 ist ein elektrischer Schalter 8 mit Steckerzungen 9 montiert. Gemäß Fig. 2, in der die in Fig. 1 erwähnten Komponenten symbolisch dargestellt sind, enthält das Gehäuse 1 einen Kegel 10, der von einer Feder 16 entgegen dem bei Bestromung drückenden Magneten 2 beaufschlagt ist, um eine Sperrstellung 12 einzustellen, wobei der Kegel 10 bei Bestromung des Magneten 2 und/oder Benutzung der Handnotbetätigung 5 gegen die Kraft der Feder 16 in eine Durchgangsstellung 11 umstellbar ist. Die zwei Wege sind beispielsweise im Gehäuse 1 ein Anschlusskanal 13 zu einer Druckquelle P und ein Anschlusskanal 14 zu einem Hydroverbraucher V. In der Sperrstellung 12 ist, wie durch das Symbol bei 15 angedeutet, das Wegesitzventil W in nur einer Strömungsrichtung leckagefrei dicht, nämlich in Strömungsrichtung vom Hydroverbraucher V zur Druckquelle P, während es in der entgegengesetzten Strömungsrichtung selbst in der Sperrstellung 12 durchgängig ist. In der Durchgangsstellung 11 sind ohnedies beide Strömungsrichtungen möglich. Der Schalter 8 bestätigt beispielsweise die Durchgangsstellung 11, wie entweder vom Magneten 2 oder der Handnotbetätigung 5 eingestellt, aber auch, wie später erläutert wird, in der Sperrstellung 12 eine Offenstellung mit einer Strömung von der Druckquelle P zum Verbraucher V, ohne Betätigung des Kegels 10 durch den Magneten 2 oder die Handnotbetätigung 5. Der Schalter 8 liefert beispielsweise ein Signal i an eine übergeordnete Steuerung CU, mit der gegebenenfalls auch der Magnet 2 verbunden ist.

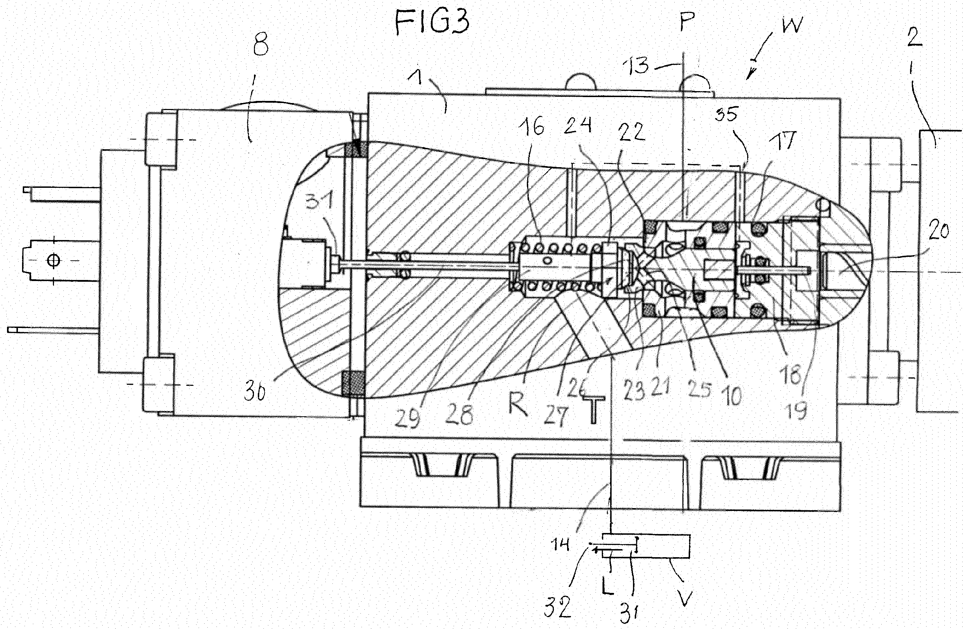

Im Detail zeigt Fig. 3, dass im Gehäuse 1, in welchem die Anschlusskanäle 13, 14 nur schematisch gezeigt sind, in einer Kammer 17 ein Einsatz 18 enthalten ist, der einen Stößel 19 abgedichtet verschieblich lagert, der auf einen Anker oder mit dem Anker des Magneten 2 verbundenen Stößel 20 ausgerichtet ist. In der Kammer 17 ist ferner ein Hülseneinsatz 21 festgelegt, der zwischen den Anschlusskanälen 13, 14 einen Sitz 22 aufweist. In dem Hülseneinsatz 21 ist der Kegel 10 abgedichtet verschieblich geführt, der über eine Feder 16 und ein Federwiderlager 24 mit einer äußeren Dichtfläche 23 leckagefrei dicht an den Sitz 22 anpressbar ist (Sperrstellung 12 des Kegels 10 wie gezeigt). Das Federwiderlager 24 besitzt einen Schaft 29, der mit einem Stößel 30 gekoppelt ist, welcher abgedichtet verschieblich in den Schalter 8 verläuft und dort mit einem Betätigungsende 31 den Schalter 8 zu betätigen vermag.

In der in Fig. 3 gezeigten Sperrstellung 12, d.h. mit von der Feder 16 an den Sitz 22 angepresster Dichtfläche 23 des Kegels 10, ist das Wegesitzventil W an sich in beiden Strömungsrichtungen leckagefrei dicht.

Der Magnet 2 ist ein drückender Magnet, d.h., bei Bestromung wird der Kegel 10 über den Stößel 19 in Fig. 3 gegen die Feder 16 nach links verlagert, so dass die Dichtfläche 23 vom Sitz 22 abgedrückt wird und die Anschlusskanäle 13, 14 miteinander verbunden sind (Durchgangsstellung 11 in Fig. 2). Die Verlagerung des Kegels 10 wird vom Federwiderlager 24 über den Stößel 30 auf den Schalter 8 übertragen, der beispielsweise das Signal liefert, das bestätigt, dass der Magnet 2 ordnungsgemäß durchgeschaltet hat bzw. bestätigt, dass bei nicht bestromtem Magneten der Kegel 10 aus irgendeinem Grund hängengeblieben ist, oder dass die Handnotbetätigung 5 benutzt wurde bzw. die Rastvorrichtung 7 nicht ordnungsgemäß gelöst wurde. Das vom Schalter 8 gelieferte Signal i kann auf unterschiedliche Weise in der übergeordneten Steuerung CU verarbeitet werden, d.h. das Signal i liegt in der Sperrstellung oder in der Durchgangsstellung zumindest des Kegels 10 an.

An den Anschlusskanal 14 ist beispielsweise eine Beaufschlagungskammer 31 des Hydroverbrauchers V angeschlossen, der beispielsweise ein einseitig beaufschlagbarer Hydrozylinder mit einer Kolbenstange 32 ist, an der permanent eine ziehende Last L wirkt.

Um trotz der in beiden Strömungsrichtungen leckagefreien Sperrstellung 12 des Kegels 10 mit seiner Dichtfläche 23 am Sitz 22 bei nicht bestromtem Magneten 2 und/oder nicht benutzter Handnotbetätigung 5 eine Durchströmung von der Druckquelle P in die Beaufschlagungskammer 31 zu ermöglichen, ist erfindungsgemäß zwischen dem Federwiderlager 24 und dem Kegel 10 ein Rückschlagventil R vorgesehen, das in Strömungsrichtung vom Anschlusskanal 14 zum Anschlusskanal 13 sperrt und in der entgegengesetzten Strömungsrichtung mit Druck von der Druckquelle P in eine Offenstellung bringbar ist. Das Rückschlagventil R wird durch die Feder 16 zum Blockieren beaufschlagt, die auch den Kegel 10 beaufschlagt. Das Rückschlagventil R weist beispielsweise einen am Federwiderlager 24 angeordneten oder an diesem einstückig ausgebildeten Schließkörper 28 mit einer kugeligen oder konischen Dichtfläche 27 auf, die mit einem Rückschlagventilsitz 26 im zur Feder 16 weisenden Ende des Kegels 10 zusammenwirkt.

In der gezeigten Ausführungsform sind die Dichtdurchmesser zwischen der Dichtfläche 23 und dem Sitz 22 und im Rückschlagventil R zumindest im Wesentlichen gleich groß. Der Kegel 10 ist über einen Gehäusekanal 35 druckausgeglichen.

Zum Rückschlagventilsitz 26 am Ende des Kegels 10 führt zumindest ein die außenliegende Dichtfläche 23 des Kegels 10 umgehender, innerer Strömungskanal 25, über welchen Druckmittel aus dem Anschlusskanal 13 auf den Dichtdurchmesser des Rückschlagventils R wirkt und bei in der Sperrstellung verbleibendem Kegel 10 die Dichtfläche 27 vom Rückschlagventilsitz 26 abhebt. Dabei wird das Federwiderlager 24 anstelle vom Kegel 10 hier nur druckabhängig in Fig. 3 nach links bewegt, so dass der Schalter 8 betätigt wird, der sonst vom Kegel 10 betätigt werden kann.

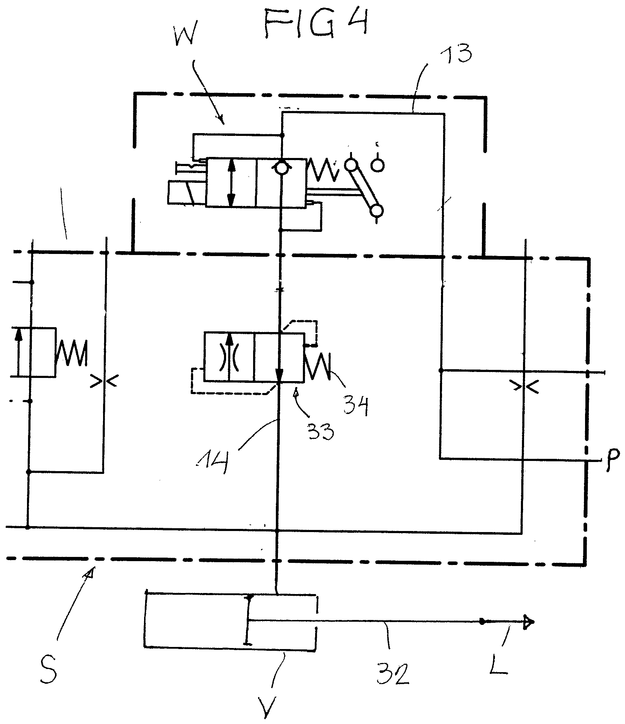

Fig. 4 verdeutlicht eine Hydraulik-Steuervorrichtung S für den Hydroverbraucher V, der beispielsweise ein einseitig beaufschlagbarer Spannzylinder eines Umlenkradschlittens eines Trag- und/oder Zugseils eines Skiliftes sein kann. In die Steuervorrichtung S ist das Wegesitzventil W der Fig. 1 bis 3, beispielsweise als Zweiwege/Zweistellungs-Sitzventil, eingegliedert, wobei der Anschlusskanal 13 mit der Druckquelle P verbunden ist, während der Anschlusskanal 14 zur Beaufschlagungskammer des Hydroverbrauchers V führt. Im Anschlusskanal 14 ist beispielsweise ein Zweiwege/Zweistellungsventil 33 vorgesehen, das durch eine Feder 34 in die gezeigte Durchgangsstellung stellbar und von stromab und stromauf jeweils druckvorgesteuert ist. In der zweiten Steuerstellung wirkt dieses Ventil 33 als Bremsventil, das eine gedrosselte Abströmung und somit eine vorbestimmte Bewegungsgeschwindigkeit des Hydroverbrauchers V einstellt.

## Patentansprüche

1. Wegesitzventil (W), mit einem in einer Sperrstellung (12) durch eine Feder (16) an einen Sitz (22) anpressbaren Kegel (10), der gegen die Feder (16) direkt mittels eines bestromten Magneten (2) vom Sitz (22) in eine Durchgangsstellung (11) abdrückbar ist, und mit einem vom Kegel (10) an einem der Sperr- oder Durchgangsstellung zugeordneten Schaltpunkt betätigbaren Schalter (8), wobei das Wegesitzventil (W) in der Sperrstellung (12) des Kegels (10) am Sitz (22) leckagefrei dicht ist, **dadurch gekennzeichnet, dass** in das Wegesitzventil (W) zwischen dem Kegel (10) und dem Schalter (8) ein von der Feder (16) leckagefrei zuhaltbares Rückschlagventil (R) eingegliedert ist, das in der Sperrstellung (12) des Kegels (10) in eine den Sitz (22) umgehende Offenstellung verstellbar ist und dabei anstelle des Kegels (10) den Schalter (8) betätigt.

2. Wegesitzventil nach Anspruch 1, **dadurch gekennzeichnet, dass** das Rückschlagventil (R) zwischen dem Kegel (10) und einem vom Kegel (10) baulich separierten Federwiderlager (24) der Feder (16) vorgesehen ist, das mit einer Schalterbetätigung, insbesondere einem Stößel (30), versehen oder bewegungsübertragend verbunden ist.

3. Wegesitzventil nach Anspruch 2, **dadurch gekennzeichnet, dass** das Federwiderlager (24) dem Kegel (10) zugewandt eine konische oder kugelige Dichtfläche (27) aufweist, und dass im Kegel (10) am dem Sitz (22) in Richtung zur Feder (16) abgewandten Ende ein Rückschlagventil-Sitz (26) vorgesehen ist, zu dem im Kegel (10) zumindest ein eine äußere Dichtfläche (23) des Kegels (10) umgehender Kanal (25) verläuft.

4. Wegesitzventil nach Anspruch 1, **dadurch gekennzeichnet, dass** der Dichtdurchmesser des Kegels (10) am Sitz (22) und der Dichtdurchmesser im Rückschlagventil (R) zumindest im Wesentlichen gleich groß sind.

5. Wegesitzventil nach Anspruch 1, **dadurch gekennzeichnet, dass** am Magneten (2) eine Handnotbetätigung (5) zum Abdrücken des Kegels (10) vom Sitz (22) vorgesehen ist.

6. Wegesitzventil nach Anspruch 5, **dadurch gekennzeichnet, dass** die Handnotbetätigung (5), vorzugsweise in der Durchgangsstellung (11) und gegebenenfalls bei betätigtem Schalter (8), durch eine Rastvorrichtung (7) mechanisch verrastbar ist.

7. Wegesitzventil nach Anspruch 1, **dadurch gekennzeichnet, dass** der Kegel (10), vorzugsweise zumindest in der Sperrstellung (12), druckausgeglichen ist.

8. Wegesitzventil nach wenigstens einem der vorhergehenden Ansprüche, **dadurch gekennzeichnet, dass** der Schalter (8) mit einer übergeordneten Steuerung (CU) verbunden ist, und betätigt ein Signal (i) liefert, welches, vorzugsweise, eine Magnetbetätigung oder Handnotbetätigung des Wegesitzventils (W) und eine Druckaufsteuerung des Rückschlagventils (R) repräsentiert.

9. Hydraulik-Steuerungsvorrichtung (S) mit einem Hydroverbraucher (V), einer Druckquelle (P) und einem Wegesitzventil nach wenigstens einem der vorhergehenden Ansprüche, **dadurch gekennzeichnet, dass** das Wegesitzventil (W) in der Hydraulik-Steuerungsvorrichtung (S) zwischen der Druckquelle (P) und der Beaufschlagungskammer (31) des Hydroverbrauchers (V) angeordnet ist, und dass die Beaufschlagungskammer (31) bei nicht betätigter Handnotbetätigung (5) und/oder nicht bestromtem Magneten (2) in der Sperrstellung (12) des Wegesitzventils aus der Druckquelle (P) über das von der Druckquelle (P) in die Offenstellung gebrachte Rückschlagventil (R), vorzugsweise mit vom Rückschlagventil (R) betätigtem Schalter (8), druckbeaufschlagbar ist.

## Claims

1. A directional seated valve (W) with a conical member (10), which is pressable in a blocking position (12) by a spring (16) against a seat (22) and which may be forced directly against the spring (16) by means of an energised magnet (2) away from the seat (22) into a flow position (11), and including a switch (8) actuable by the conical member (10) at a switching point associated with the blocking or flow position, wherein the directional seated valve (W) is sealed in a leak-free manner in the blocking position (12) of the conical member (10) on the seat (22), **characterised in that** incorporated into the directional seated valve (W) between the conical member (10) and the switch (8) there is a check valve (R), which may be held closed in a leak-free manner by the spring (16) and which, in the blocking position (12) of the conical member (10), is movable into an open position bypassing the seat (22) and thus actuates the switch (8) instead of the conical member (10).

2. A directional seated valve as claimed in Claim 1, **characterised in that** the check valve (R) is provided between the conical member (10) and a spring abutment (24) of the spring (16), which is structurally separated from the conical member (10) and which is provided with or connected in a movement transmitting manner to, a switch actuator, particularly a push rod (30).

3. A directional seated valve as claimed in Claim 2, **characterised in that** a spring abutment (24) has a conical or spherical sealing surface (27), which is directed towards the conical member (10), and that provided in the conical member (10) at the end directed away from the seat (22) in the direction towards the spring (16) there is a check valve seat (26), to which at least one passage (25) bypassing an outer sealing surface (23) of the conical member (10) extends within the conical member (10).

4. A directional seated valve as claimed in Claim 1, **characterised in that** the sealing diameter of the conical member (10) on the seat (22) and the sealing diameter in the check valve (R) are at least substantially of the same size.

5. A directional seated valve as claimed in Claim 1, **characterised in that** provided on the magnet (22) there is a manual emergency actuator (5) for pressing the conical member (10) away from the seat (22).

6. A directional seated valve as claimed in Claim 5, **characterised in that** the manual emergency actuator (5) is mechanically lockable by a locking device (7), preferably in the flow position (11) and optionally when the switch (8) is actuated.

7. A directional seated valve as claimed in Claim 1, **characterised in that** the conical member (10) is pressure balanced, preferably at least in the blocking position (12).

8. A directional seated valve as claimed in at least one of the preceding claims, **characterised in that** the switch (8) is connected to a supervisory controller (CU) and, when actuated, supplies a signal (i), which, preferably, represents a magnetic actuation or manual emergency actuation of the directional seated valve and a pressure opening control of the check valve (R).

9. A hydraulic control apparatus (S) with a hydraulic consumer (V) and a pressure source (P) and a directional seated valve as claimed in at least one of the preceding claims, **characterised in that** the directional seated valve (W) is arranged in the hydraulic control apparatus (S) between the pressure source (P) and the impingement chamber (31) of the hydraulic consumer (V) and that the impingement chamber (31) may be acted upon by pressure when the manual emergency actuator (5) is not actuated and/or the magnet (2) is not energised in the blocking position (12) of the directional seated valve from the pressure source (P) via the check valve (R) moved by the pressure source (P) into the open position, preferably with the switch (8) actuated by the check valve (R).

## Revendications

1. Distributeur à clapet (W) doté d'un boisseau (10) pouvant être plaqué dans une position de blocage (12) contre un siège (22) à l'aide d'un ressort (16), lequel boisseau peut être directement poussé contre le ressort (16) depuis le siège (22) vers une position de passage (11) au moyen d'un aimant (2) activé, et doté d'un interrupteur (8) pouvant être actionné par le boisseau (10) en un point de commutation assigné à la position de blocage ou de passage, dans lequel le distributeur à clapet (W) dans la position de blocage (12) du boisseau (10) est étanche et exempt de toute fuite avec le siège (22), **caractérisé en ce que** dans le distributeur à clapet (W) est intégré entre le boisseau (10) et l'interrupteur (8) un clapet anti-retour (R) pouvant être maintenu fermé par le ressort (16) de manière à être exempt de fuite, lequel clapet anti-retour dans la position de blocage (12) du boisseau (10) peut être réglé dans une position ouverte distante du siège (22) et actionne ainsi l'interrupteur (8) à la place du boisseau (10).

2. Distributeur à clapet selon la revendication 1, **caractérisé en ce que** le clapet anti-retour (R) est disposé entre le boisseau (10) et une butée de ressort (24) du ressort (16) structurellement séparée du boisseau (10), laquelle butée est munie d'une commande d'interrupteur, en particulier d'un coulisseau (30), ou reliée par transmission de mouvement à celle-ci.

3. Distributeur à clapet selon la revendication 2, **caractérisé en ce que** la butée de ressort (24) présente une surface d'étanchéité (27) conique ou sphérique orientée vers le boisseau (10), et **en ce qu'**il est prévu dans le boisseau (10) un siège de clapet anti-retour (26) sur le siège (22), dans la direction de l'extrémité opposée au ressort (16), vers lequel s'étend dans le boisseau (10) au moins un canal (25) contournant une surface d'étanchéité extérieure (23) du boisseau (10).

4. Distributeur à clapet selon la revendication 1, **caractérisé en ce que** le diamètre d'étanchéité du boisseau (10) à l'endroit du siège (22) et le diamètre d'étanchéité dans le clapet anti-retour (R) sont au moins sensiblement de la même taille.

5. Distributeur à clapet selon la revendication 1, **caractérisé en ce qu'**une commande manuelle de secours (5) est prévue sur l'aimant (2) pour pousser le boisseau (10) depuis le siège (22).

6. Distributeur à clapet selon la revendication 5, **caractérisé en ce que** la commande manuelle de secours (5) peut être enclenchée mécaniquement via un dispositif d'enclenchement (7), de préférence dans la position de passage (11) et le cas échéant avec l'interrupteur (8) actionné.

7. Distributeur à clapet selon la revendication 1, **caractérisé en ce que** le boisseau (10) est équilibré en pression, de préférence au moins dans la position de blocage (12).

8. Distributeur à clapet selon au moins l'une des revendications précédentes, **caractérisé en ce que** l'interrupteur (8) est relié à une unité de commande de niveau supérieur (CU) et, actionné, délivre un signal (i), lequel, de préférence, représente un actionnement d'aimant ou une commande manuelle de secours du distributeur à clapet (W) et une commande d'augmentation de la pression du clapet anti-retour (R).

9. Dispositif de commande hydraulique (S) doté d'un consommateur hydraulique (V), d'une source de pression (P) et d'un distributeur à clapet selon au moins l'une des revendications précédentes, **caractérisé en ce que** le distributeur à clapet (W) est agencé dans le dispositif de commande hydraulique (S) entre la source de pression (P) et la chambre d'admission (31) du consommateur hydraulique (V), et **en ce que** la chambre d'admission (31) peut, lorsque la commande manuelle de secours (5) n'est pas actionnée et/ou l'aimant (2) n'est pas activé, être soumise à la pression dans la position de blocage (12) du distributeur à clapet depuis la source de pression (P) via le clapet anti-retour (R) amené dans la position ouverte par la source de pression (P), de préférence avec l'interrupteur (8) actionné par le clapet anti-retour (R).
